(19) Europäisches Patentamt
European Patent Office
Office européen des brevets

(11) EP 4 737 045 A1

(12) EUROPEAN PATENT APPLICATION
published in accordance with Art. 153(4) EPC

(43) Date of publication:
06.05.2026 Bulletin 2026/19

(21) Application number: 24842769.2

(22) Date of filing: 25.03.2024

(51) International Patent Classification (IPC):
B23K 9/173 (2006.01)    B23K 9/16 (2006.01)

(52) Cooperative Patent Classification (CPC):
B23K 9/16; B23K 9/173

(86) International application number:
PCT/JP2024/011679

(87) International publication number:
WO 2025/017968 (23.01.2025 Gazette 2025/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 18.07.2023 JP 2023116872

(71) Applicant: JFE Steel Corporation
Tokyo, 100-0011 (JP)

(72) Inventors:
• KONISHI, Kyohei
Tokyo 100-0011 (JP)
• NAGAO, Ryota
Tokyo 100-0011 (JP)
• KOZUKI, Shohei
Tokyo 100-0011 (JP)
• TANIGUCHI, Koichi
Tokyo 100-0011 (JP)

(74) Representative: Haseltine Lake Kempner LLP
Bürkleinstrasse 10
80538 München (DE)

(54) **NARROW-GROOVE GAS-SHIELDED ARC WELDING METHOD**

(57) Provided is a narrow-gap gas-shielded arc welding method that can achieve high welding efficiency and produce a weld joint while preventing defects such as poor penetration on a groove surface. Specifically, provided is a narrow-gap gas-shielded arc welding method for joining steel plates with a plate thickness t of 22 mm or greater using narrow-gap multi-layer welding by setting the angle θ of a groove between the steel plates to 25° or less and setting the gap G of the groove at the bottom to 7 mm to 18 mm, the method including setting the distance d between a side edge portion at the welding wire tip and a groove surface at the bottom of the steel plate to a range of 3.0 mm or less, and setting the value of a variable K determined from Expression (1) below to a range of 24.0 to 66.0:

$$K = (92.3 \times I/W + 9.1) \times H - 0.5 \times d \ ... \ (1),$$

where H represents the welding heat input (kJ/mm), I represents the welding current (A), and W represents the welding wire feed rate (cm/min).

[Fig. 1]

EP 4 737 045 A1

**Description**

Technical Field

The present invention relates to a gas-shielded arc welding method, particularly to a narrow-gap gas-shielded arc welding method to be applied to steel plates (hereinafter also simply referred to as "thick steel plates") with a thickness of 22 mm or greater. The "narrow gap" herein means that the angle of a groove is 25° or less, and the minimum width of the groove gap between the steel plates, which are the materials (base metals) to be welded together, is 50% or less of the thickness of the steel plates. The numerical range "x to y" represents x or more and y or less, inclusive of boundary values.

Background Art

Gas-shielded arc welding used to weld steel plates together is widely utilized in the manufacturing fields, including but not limited to automobiles, buildings, bridges, and electrical devices. In recent years, with the trend toward increased size and wall thickness of steel structures, the amount of deposit metal required for welding, particularly for butt welding of steel plates in the manufacturing process has increased. Consequently, the welding process has become more time-consuming, resulting in higher manufacturing costs. To address the challenge, the application of a narrow-gap gas-shielded arc welding method is being considered. The method involves performing multi-layer welding on a groove between steel plates with a small gap relative to the plate thickness, using a gas-shielded arc welding method. Compared with conventional gas-shielded arc welding methods, the narrow-gap gas-shielded arc welding method requires less deposit metal, enables high-efficiency and energy-saving welding, and is further expected to reduce the process costs.
In response to such a demand, Patent Literature 1 discloses a double-sided multi-layer welding method for a double-sided U-shaped groove joint. The welding method includes performing layered welding based on TIG welding with the use of an inert gas, wherein the inert gas is employed to suppress the generation of slag and spatter and prevent defects in the stacked layers.
Patent Literature 2 discloses narrow-gap welding that includes weaving a welding torch to suppress spatter and incomplete fusion.
Patent Literature 3 discloses a narrow-gap gas-shielded arc welding method for joining thick steel materials involving performing multi-layer welding on a narrow groove between the steel materials. According to the method described in Patent Literature 3, the first-layer welding is performed using multi-electrode welding with two or more electrodes, where one of the preceding first and second electrodes has straight polarity and the other has reverse polarity, with both positioned along predetermined parallel weld lines. Further, the distance between the welding wire tips of the first and second electrodes is set to 5 mm to 16 mm, the angle of a straight line connecting the welding wire tips of the first and second electrodes, with respect to the direction perpendicular to the weld lines is set to 45° or less, and the depth of fusion in the direction perpendicular to the weld lines at the bottom of the thick steel materials is set to 1.5 mm or greater. The method is to improve welding efficiency without causing defects, even when performing beveling working such as gas cutting or plasma arc cutting.

Citation List

Patent Literature

Patent Literature 1: JP-2009-061483A
Patent Literature 2: JP-2010-115700A
Patent Literature 3: JP-2015-223605A

Summary of Invention

Technical Problem

However, the TIG welding method, which uses a non-consumable electrode as described in Patent Literature 1, has a significantly lower welding efficiency than MAG or $CO_2$ welding, which uses steel wires as consumable electrodes. In addition, according to the welding method described in Patent Literature 2, the weaving direction of the welding torch is oriented toward the steel plate surface rather than toward the depth direction of the groove, making it necessary to weave the welding torch before molten metal drips. Consequently, it is necessary to use a low welding current of approximately 150 A to suppress the amount of deposit metal per pass. Therefore, when this welding method is applied to the welding of thick steel plates, multi-pass layered welding with small amounts of deposit metal is required, which leads to an increase of defects in the stacked layers, such as poor penetration, as well as a significant decrease in welding efficiency.

Further, it is commonly known that gas-shielded arc welding, when performed with straight polarity, results in arc instability and a large amount of spatter. When the method described in Patent Literature 3 is employed, a large amount of spatter may be generated from the electrode for which straight polarity is adopted, and spatter may adhere to the inside of the groove as well as to the welding torch, which may cause welding defects. Furthermore, when multi-electrode welding is performed with three or more electrodes, hot cracks may occur in the central portion of the weld metal.

As described above, no high-quality, high-efficiency narrow-gap gas-shielded arc welding method applicable to the welding of thick steel plates has yet to be developed.

Meanwhile, advanced welding automation technologies, such as the development of welding robots with reduced weight, enhanced functionality, and improved precision , have made it possible to control welding torch suitable for various groove shapes and welding positions, which had been difficult to achieve. This technology has enabled a welding process suitable for various steel plates, groove shapes, welding positions, and welding materials.

The present invention has been made in view of the foregoing problems and the current situation, and an object of the present invention is to provide a narrow-gap gas-shielded arc welding method for steel plates, the method being capable of achieving high welding efficiency and producing a weld joint while preventing the occurrence of defects such as poor penetration on a groove surface.

Solution to Problem

To achieve the foregoing object, the inventors have conducted concentrated studies on factors that affect the occurrence of defects such as poor penetration on a groove surface. Consequently, the inventors have found that it is effective to, when performing narrow-gap gas-shielded arc welding, appropriately control the welding heat input for a groove surface, the welding current, and the welding wire feed rate in order to prevent arc instability or arc deflection, and the occurrence of poor penetration.

The present invention has been completed based on the above findings and further consideration. That is, the summary of the present invention is as follows.

[1] A narrow-gap gas-shielded arc welding method for joining steel plates having a plate thickness t of 22 mm or greater, involving performing narrow-gap multi-layer welding with a groove angle θ of 25° or less and a groove gap G at a bottom within the range of 7 mm to 18 mm, wherein a distance d between a side edge portion at a welding wire tip and a groove surface at a bottom of the steel plate is adjusted to fall within a range of 3.0 mm or less, and wherein a value of a variable K determined from Expression (1) below is adjusted to fall within a range of 24.0 to 66.0:

$$K = (92.3 \times I/W + 9.1) \times H - 0.5 \times d \ ... \ (1),$$

where H represents a welding heat input (kJ/mm), I represents a welding current (A), and W represents a welding wire feed rate (cm/min).

[2] The narrow-gap gas-shielded arc welding method according to [1], in which a distance h from the tip of a power supply tip of a welding torch to the welding wire tip is set within a range of 10 mm to 40 mm, and a feed angle φ of the welding wire with respect to the groove at the bottom is set within a range of 0° to 15° with respect to a perpendicular line.

[3] The narrow-gap gas-shielded arc welding method according to [1] or [2], in which a diameter f of the welding wire is set within a range of 1.0 mm to 1.6 mm, the welding heat input H is set within a range of 0.8 kJ/mm to 2.3 kJ/mm, the welding current I is set within a range of 270 A to 370 A, and the welding wire feed rate W is set within a range of 1000 cm/min to 1700 cm/min.

[4] The narrow-gap gas-shielded arc welding method according to any one of [1] to [3], in which a penetration depth p at the groove surface is set to 1.0 mm or greater.

[5] The narrow-gap gas-shielded arc welding method according to any one of [1] to [4], in which a mixed gas containing 20 volume% or more $CO_2$ gas is used as a shielding gas for the gas-shielded arc welding.

[6] The narrow-gap gas-shielded arc welding method according to any one of [1] to [5], in which the welding wire fed to the power supply tip of an electrode is curved to have a curvature radius ρ within a range of 150 mm to 300 mm.

Advantageous Effects of Invention

According to the present invention, in performing a narrow-gap gas-shielded arc welding method, the welding heat input to a groove surface, welding current, and welding wire feed rate can be appropriately controlled, thereby preventing defects such as poor penetration at the groove surface and achieving high welding efficiency. As a result, a stable weld joint can be obtained compared to the production of a conventional weld joint, which has a significant effect on the industry. The present invention is particularly useful for a welding process for ordinary structures, such as buildings, bridges, and ships.

Brief Description of Drawings

[Fig. 1] is an explanatory view schematically illustrating a groove shape used in the present invention.
[Fig. 2] is a schematic view illustrating the relationship between a welding wire and a groove surface during a welding process.
[Fig. 3] is a schematic view illustrating the feed angle of a welding wire with respect to a groove at the bottom.
[Fig. 4] is a schematic view illustrating the penetration depth of molten metal on a groove surface.
[Fig. 5] is a schematic view illustrating an embodiment of multi-layer welding.

Description of Embodiments

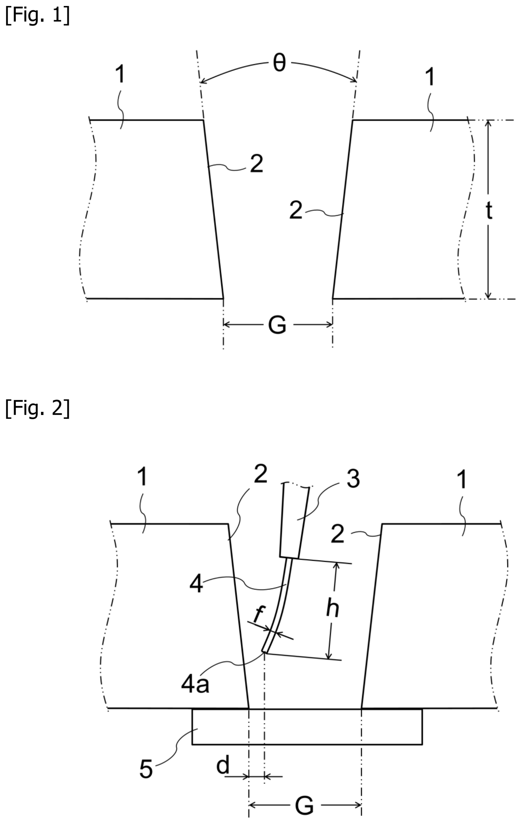

Hereinafter, an embodiment of the present invention is specifically described based on Fig. 1.

The present embodiment relates to a narrow-gap gas-shielded arc welding method for joining steel plates having a plate thickness t of 22 mm or greater, the method including performing narrow-gap multi-layer welding with the groove angle $\theta$ between the steel plates of 25° or less and the groove gap G at the bottom within the range of 7 mm to 18 mm. It should be noted that the "steel plates" herein also include thick-walled steel materials and thick steel plate materials, for example.

[Plate thickness t of steel plates: 22 mm or greater]

The plate thickness t of the steel plates 1 is set to 22 mm or greater. If the plate thickness t is less than 22 mm, in a conventional single bevel groove, increasing the groove angle $\theta$ to reduce the groove gap may result in a smaller cross-sectional area of the groove than that of the target groove of the present embodiment, which may lead to high-efficiency welding. Preferably, the plate thickness t is set to 30 mm or greater.

The upper limit of the plate thickness t is not specified. Steel structures, including special structures, typically have a plate thickness of 200 mm or less. Therefore, in the present embodiment, the upper limit of the plate thickness t of the steel plates 1 is preferably set to 200 mm.

The present embodiment is applicable to various grades of steel plates ranging from mild steel plates to 780 MPa-grade high-tensile steel plates. In particular, 590 MPa-grade high-tensile steel plates can be welded without preheating.

[Groove angle $\theta$: 25° or less]

The groove shape used in the present embodiment is a single V groove having a groove angle $\theta$ of 25° or less, with a gap provided at the bottom. It should be noted that the groove shape of the present embodiment includes a square groove with a groove angle $\theta$ of 0°. Fig. 1 illustrates an example of the groove shape. In this figure, reference numeral 1 denotes a steel plate (base metal), and reference numeral 2 denotes a groove surface. As the groove cross-sectional area of the groove portion between the steel plates 1 decreases, the welding efficiency improves; however, this also increases the possibility of defects such as poor penetration. When the groove angle $\theta$ of the groove portion exceeds 25°, conventional welding methods can be applied. Accordingly, the present embodiment is directed to a narrow groove having a groove angle $\theta$ of 25° or less, to which the conventional welding methods are not applicable, and which is expected to achieve a further improvement in efficiency. It should be noted that a single V groove having a groove angle $\theta$ of 0° is referred to as a so-called square groove, and from the perspective of the amount of deposit metal, the case where the groove angle $\theta$ is 0° is the most efficient. However, since the groove may gradually close during welding due to welding heat strain, it is preferable to set the groove angle $\theta$ in accordance with the plate thickness t, by taking such a possibility into account. Note that the upper limit of the preferred range of the groove angle $\theta$ when the plate thickness t exceeds 100 mm is preferably set to 10°. More preferably, the groove angle $\theta$ is within the range of 5° to 10°.

[Gap G of groove at bottom: 7 mm to 18 mm]

As the groove portion between the steel plates 1 decreases, the welding efficiency improves; however, this also increases the possibility of defects such as poor penetration. In addition, conventional welding methods can be applied to welding steel plates having a groove gap G at the bottom exceeding 18 mm, wherein the groove gap G at the bottom refers to the groove width between the bottom edges of the groove portion prior to welding. Therefore, the present embodiment is directed to welding steel plates having a groove gap G at the bottom of 18 mm or less, which is expected to achieve a further improvement in efficiency, compared with conventional welding methods. Meanwhile, when the groove gap G at the bottom is less than 7 mm, it becomes difficult for the welding torch and welding wire to approach the groove bottom, resulting in significant variation in welding quality and causing potential defects such as poor penetration. Therefore, the groove gap G at the bottom is set within the range of 7 mm to 18 mm. Preferably, the groove gap G at the bottom is set within the range of 8 mm to 12 mm.

[Multi-layer welding]

In the present embodiment, steel plates having the aforementioned narrow groove are joined using multi-layer welding with one or more electrodes.

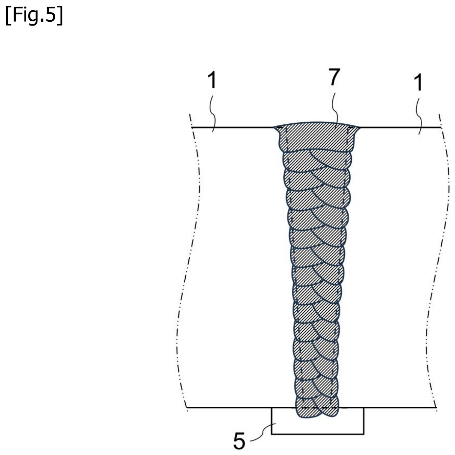

Fig. 5 illustrates an example configuration of multi-layer welding. The number of weld passes used to form the weld metal 7 in each layer may be a single pass or multiple passes and is not limited to a specific number. In this embodiment, reference numeral 5 denotes a backing material.

[Distance d between side edge portion at welding wire tip and groove surface at bottom: 3.0 mm or less]

As illustrated in Fig. 2, the horizontal distance (hereinafter also simply referred to as a "wire tip-groove surface distance") d between a side edge portion at a tip 4a of a welding wire 4 of a first electrode and the bottom of the groove surface 2 should be adjusted to be within the range of 3.0 mm or less. If the wire tip-groove surface distance d exceeds 3.0 mm, the position of an arc shifts away from the groove surface 2, making it difficult to efficiently melt the groove surface 2. Therefore, the distance d is set to 3.0 mm or less. Meanwhile, if the distance d is less than 0.1 mm, an arc may be generated between the upper portion of the wire 4 and the groove surface 2, potentially making it difficult to efficiently melt the groove surface 2 at the bottom. Therefore, the distance d is preferably set to 0.1 mm or greater. More preferably, the distance d is set within the range of 0.5 mm to 2.0 mm, and further preferably, it is set within the range of 0.5 mm to 1.0 mm. It should be noted that the "side edge portion at the welding wire tip" refers to a side edge portion that is closer to the groove surface 2 of the steel plate to be melted at the bottom.

[Control of variable K for adjusting distance d]

The present embodiment relates to a narrow-groove gas-shielded arc welding method, in which the distance d is adjusted to stabilize an arc and suppress poor penetration on the groove surface. To this end, the value of a variable K determined from Expression (1) below is controlled to be within the range of 24.0 to 66.0.

$$K=(92.3 \times I/W + 9.1) \times H - 0.5 \times d \ ...(1),$$

where H represents the welding heat input (kJ/mm), I represents the welding current (A), and W represents the welding wire feed rate (cm/min).

Expression (1) above is a relational expression derived by analyzing the relationship between the penetration characteristics and the welding heat input H, welding current I, welding wire feed rate W, and wire tip-groove surface distance d from substantial experimental data.

The inventors have found that when the K value is within the range of 24.0 to 66.0, an arc becomes stable and incomplete penetration is unlikely to occur. Preferably, the K value is within the range of 30.0 to 60.0.

Further, the heat input H is preferably set within the range of 0.8 kJ/mm to 2.3 kJ/mm. If the heat input H is less than 0.8 kJ/mm, the thermal energy required to melt the bottom of the groove surface 2 becomes insufficient, resulting in incomplete penetration. Meanwhile, if the heat input H exceeds 2.3 kJ/mm, an arc becomes unstable, resulting in significant variation in welding quality and potentially causing defects such as poor penetration. More preferably, the value of the variable K is set within the range of 1.0 kJ/mm to 2.2 kJ/mm.

The welding current I is preferably set within the range of 270 A to 370 A. If the current I is less than 270 A, the arc directivity may decrease or the heat input may become insufficient, potentially causing poor penetration. Meanwhile, if the current I exceeds 370 A, droplet transfer may become irregular, resulting in instability of the welding target position. More preferably, the welding current I is set within the range of 290 A to 360 A.

The welding wire feed rate W is preferably set within the range of 1000 cm/min to 1700 cm/min. If the feed rate W is less than 1000 cm/min, droplet transfer may become irregular, resulting in instability of the welding target position. Meanwhile, if the feed rate W exceeds 1700 cm/min, the arc directivity may decrease or the heat input may become insufficient, potentially causing poor penetration. More preferably, the welding wire feed rate W is set within the range of 1200 cm/min to 1600 cm/min.

[Other preferable requirements, welding conditions, etc. related to welding method]

(Distance h from tip of power supply tip to welding wire tip: 10 mm to 40 mm)

In the present embodiment, as illustrated in Fig. 2, the distance (hereinafter also simply referred to as a "chip-wire tip distance") h from a power supply tip 3 at the tip of the welding torch to the tip 4a of the welding wire 4 fed therefrom is preferably adjusted to be within the range of 10 mm to 40 mm. It should be noted that the distance herein refers to the distance along the direction in which the power supply tip 3 is oriented.

If the chip-wire tip distance h is less than 10 mm, spatter generated during welding adheres to the power supply tip, causing unstable arc discharge. Meanwhile, if the distance h exceeds 40 mm, droplet transfer may become irregular, potentially resulting in instability of the welding target position. Therefore, adjusting the distance h to be within the range of 10 mm to 40 mm can suppress the adhesion of spatter to the power supply tip, stabilize droplet transfer, and thereby achieve an excellent weld joint. Accordingly, the chip-wire tip distance h is preferably adjusted to be within the range of 10 mm to 40 mm, and more preferably, within the range of 15 mm to 30 mm.

(Feed angle $\phi$ of welding wire with respect to groove at bottom: 0° to 15° with respect to perpendicular line)

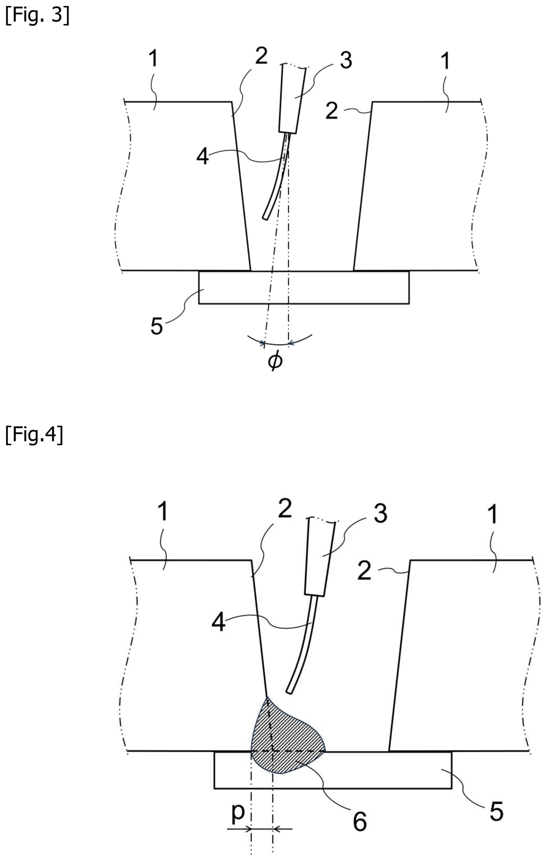

An arc is directional and tends to follow the orientation indicated by the tip of an electrode (welding wire). To effectively utilize such directivity of an arc to melt the groove surface, it is advantageous to arrange an electrode such that its tip is directed to the groove surface. The direction indicated by the tip of the electrode varies significantly depending on the feed angle $\phi$ of the welding wire fed from the power supply tip at the tip of the welding torch. Fig. 3 illustrates the feed angle $\phi$ of the welding wire fed from the power supply tip at the tip of the welding torch with respect to the groove at the bottom.

If the feed angle $\phi$ of the welding wire 4 fed from the power supply tip 3 at the tip of the welding torch with respect to the groove at the bottom is less than 0° with respect to the perpendicular line, a current flows through a path with lower resistance. Consequently, the arc drifts upward along the wire serving as the electrode (arc creeping), making it difficult to maintain the melting of the target groove surface 2, particularly caused at the bottom. Conversely, if the feed angle $\phi$ of the welding wire 4 fed from the power supply tip 3 with respect to the groove at the bottom exceeds 15° with respect to the perpendicular line, an arc will face the groove surface 2 too directly, resulting in weld bead with a projecting shape. This can lead to insufficient arc melting during the welding of subsequent layers, increasing the likelihood of welding defects. Therefore, the feed angle $\phi$ of the welding wire 4 with respect to the groove at the bottom is preferably set within the range of 0 to 15° with respect to the perpendicular line. More preferably, the feed angle $\phi$ is set within the range of 5 to 12°.

It should be noted that the feed angle $\phi$ of the welding wire 4 with respect to the groove at the bottom is equivalent to the tilt of the tip of the power supply tip 3. Therefore, it is possible to control the feed angle $\phi$ of the welding wire 4 by adjusting the tilt of the tip of the power supply tip 3. Note that the feed angle $\phi$ in the direction of the groove surface is indicated by "+." In addition, the perpendicular line herein refers to a line perpendicular to the groove at the bottom.

(Curvature radius $\rho$ of welding wire fed to power supply tip: 150 mm to 300 mm)

Further, a power supply tip with a curved tip is employed to control the feed angle $\phi$ of the welding wire 4, which is fed from the power supply tip 3 at the tip of the welding torch. At this time, the welding wire passes through the power supply tip with the curved tip. Therefore, it is preferable to curve the welding wire in advance using a so-called three-point roller, for example, to allow for smooth passing of the welding wire through the power supply tip. If the curvature radius $\rho$ of the welding wire is less than 150 mm, the feed resistance of the wire increases, making it difficult to stably feed the wire and maintain the arc. Conversely, if the curvature radius $\rho$ of the welding wire exceeds 300 mm, the curved shape of the tip of the power supply tip no longer contributes to reducing the wire's feed resistance. As a result, stable feeding of the welding wire remains difficult, and maintaining the arc becomes challenging. Accordingly, the curvature radius $\rho$ of the welding wire 4 fed to the power supply tip 3 is preferably set within the range of 150 mm to 300 mm. More preferably, the curvature radius $\rho$ is set within the range of 175 mm to 275 mm.

(Diameter f of welding wire: 1.0 mm to 1.6 mm)

A welding wire produced for narrow-gap gas-shielded arc welding typically has a diameter in the range of 0.6 mm to 2.0 mm. When welding is performed with the same current, a smaller wire diameter typically results in a higher deposition rate due to Joule heat. Therefore, it is preferable to select a relatively small wire diameter to implement a highly efficient welding process. Conversely, if the wire diameter is excessively small, the wire may soften due to Joule heat, resulting in unstable welding. Therefore, the diameter of the welding wire used in the present embodiment is preferably set within the range of 1.0 mm to 1.6 mm.

(Penetration depth p at groove surface: 1.0 mm or greater)

As illustrated in Fig. 4, the penetration depth p at the groove surface in narrow-gap gas-shielded arc welding is influenced by the surface quality of the groove surface resulting from beveling working such as gas cutting, in particular, by the depth of the recessed portion and cleanness. In ordinary structures, groove surfaces are typically subjected to welding as they are without undergoing any treatment. Accordingly, in order to effectively prevent welding defects such as hot cracking and incomplete fusion, regardless of variations in the surface quality caused by beveling working, it is necessary to perform welding in a manner that sufficiently melts the groove surface, especially at the bottom of the groove, where the temperature tends to be lower and the penetration depth correspondingly reduced during welding.

For the aforementioned reasons, in the present embodiment, the penetration depth p at the groove surface near the bottom is preferably set to 1.0 mm or greater. More preferably, it is 1.5 mm or greater. However, if the penetration depth p exceeds 4.0 mm, the amount of molten metal on the groove surface increases, so that the molten metal becomes likely to flow toward the bottom of the groove under its own weight. This may result in the formation of undercut above the weld bead, leading to a welding defect. Accordingly, the penetration depth is preferably set to 4.0 mm or less.

(Multiple electrodes)

Described hereinabove are the welding conditions of the present embodiment, that is, the welding conditions for the first electrode when multi-electrode welding is performed with two or more electrodes. Described below are preferred conditions related to a second electrode, a third electrode, and the like when multi-electrode welding is performed with two or more electrodes.

- Arrangement relationship between first and second electrodes

When narrow-gap multi-layer welding is performed with a single pass per layer, welding heat tends to concentrate at the center of the groove when only a single electrode is used. In such a case, the groove surface of each steel plate is not melted sufficiently, often resulting in incomplete fusion, i.e., cold lap, or defects due to spatter adhering to the groove surface, slag inclusion, and the like. Particularly in the first-layer welding, the steel plate temperature is low, resulting in a shallow penetration depth and an increased likelihood of defects due to incomplete fusion. Therefore, in the present embodiment, the first and second electrodes are preferably arranged at positions along predetermined parallel weld lines.

- Distance between welding wire tips of first and second electrodes

The distance (hereinafter also simply referred to as a "first electrode-second electrode distance") a between the tips of welding wires fed from power supply tips at the tips of the respective welding torches of the first and second electrodes is preferably adjusted to be in the range of 5 to 16 mm. It should be noted that the "distance between the welding wire tips" herein refers to the distance between the centers of the welding wire tips of the respective electrodes. If the first electrode-second electrode distance a is less than 5 mm, a current (electrons) may flow between the electrodes, reducing the amount of heat of arcs. As a result, the groove surfaces 2 may not be sufficiently melted. Meanwhile, if the first electrode-second electrode distance a exceeds 16 mm, outward electromagnetic forces between the electrodes decrease in inverse proportion to the distance. This makes it difficult to obtain repulsive forces of arcs sufficient to overcome inward electromagnetic forces generated by currents flowing on the groove surfaces, causing the arcs to be directed inward, and heat may thus concentrate in the center of the groove. Consequently, the groove surfaces are not melted sufficiently. To address this, the first electrode-second electrode distance a is preferably adjusted to be within the range of 5 mm to 16 mm. More preferably, to achieve deeper and more stable melting of the groove surfaces through stronger arc repulsion, the first electrode-second electrode distance a is adjusted to be within the range of 5 mm to 8 mm.

- Angle of straight line connecting welding wire tips of first and second electrodes

If the angle $\alpha$ of a straight line connecting the welding wire tips of the first and second electrodes with respect to the direction perpendicular to the weld lines exceeds 60°, it becomes difficult to obtain sufficient arc repulsive forces and to sufficiently melt the groove surfaces. Therefore, it is preferable that the angle (hereinafter also simply referred to as a "first electrode-second electrode arrangement angle") $\alpha$ of the straight line connecting the welding wire tips of the first and second electrodes with respect to the direction perpendicular to the weld lines be set to 60° or less. More preferably, the

angle $\alpha$ is set to 45° or less. Note that the first electrode-second electrode arrangement angle $\alpha$ may be 0°.

- Polarity of each electrode

The polarity of each of the first and second electrodes is not limited to a specific type, and may be either wire minus (straight polarity) or wire plus (reverse polarity). When the first and second electrodes are set to the same polarity, for example, when both electrodes are set to wire plus, their arcs are directed inward due to the attracting electromagnetic forces, causing heat to concentrate in the center of the groove. As a result, each groove surface may not be sufficiently melted. Meanwhile, when one of the first and second electrodes is set to wire minus (straight polarity) and the other electrode is set to wire plus (reverse polarity), and the first and second electrodes are appropriately arranged, their welding currents generate strong outward electromagnetic forces through magnetic fields, causing the arcs to repel each other. Consequently, a sufficient penetration depth can be achieved at each groove surface. Based on this, it is more preferable to set one of the first and second electrodes to wire minus (straight polarity) and the other electrode to wire plus (reverse polarity).

- Third electrode and following electrodes

During multi-electrode welding with three or more electrodes, if the height of the weld deposit in the first-layer welding exceeds the groove gap at the bottom, hot cracks are more likely to occur. To mitigate this risk, it is effective to arrange the third and subsequent electrodes in the center of the groove, behind the first and second electrodes. This arrangement can further reduce the number of stacked layers, significantly reducing the risk of defects in the stacked layers due to the multi-layer welding. It should be noted that the "center of the groove" may include a range of $\pm 10\%$ of the gap G of the groove from the center of the groove.

The third electrode and subsequent electrodes are preferably arranged such that the distance from the preceding electrode is within the range of 10 mm to 100 mm, from the perspective of ensuring resistance to hot cracks. The "distance from the preceding electrode" herein refers to, when four electrodes are employed, the distance between the welding wire tips of the second electrode and third electrode, or the distance between the welding wire tips of the third electrode and the fourth electrode. It should be noted that the polarity of each of the third and subsequent electrodes is not limited to a specific type, and may be either wire minus (straight polarity) or wire plus (reverse polarity).

(Shielding gas: mixed gas containing 20 volume% or more of $CO_2$ gas)

The heat source characteristics of arcs and the oxygen content in a weld metal are also significantly influenced by the composition of a shielding gas. Therefore, the shielding gas used for the gas-shielded arc welding in the present embodiment is preferably a mixed gas containing 20 volume% or more $CO_2$ gas, with the balance being an inert gas such as Ar. More preferably, the shielding gas consists of 100 volume% $CO_2$ gas. If the $CO_2$ gas content is less than 20 volume%, the arc tension is reduced and heat input to the weld from the arcs becomes dispersed, making it difficult to achieve a predetermined penetration depth. Therefore, the $CO_2$ gas content in the shielding gas is preferably set to 20 volume% or greater. Additionally, in the present embodiment, it is preferable to increase the oxygen concentration in the weld metal, as it governs the flow behavior of a weld metal. This promotes convection on the surface of the molten pool to flow from the peripheral portion of the molten pool toward the central portion, thereby stably increasing the penetration depth at the bottom of each steel plate within the groove.

(Other welding conditions)

In the present embodiment, conditions other than the welding conditions do not need to be specified and may follow conventional methods. For example, the welding voltage V may be set between 28 V and 40 V, and the welding speed S may be set between 300 mm/min to 1000 mm/min.

[Welding automation technology]

As described above, in narrow-gap gas-shielded arc welding for steel plates, it is necessary to optimize the welding heat input to a groove surface, the welding current, and the welding wire feed rate. In recent years, however, advancements in welding automation technologies, such as weight reduction, performance enhancement, and accuracy improvement in welding robots and similar systems, have promoted the development of welding control technologies applicable to various groove shapes and welding positions, which had previously been difficult to achieve. By incorporating a welding condition control method based on the narrow-gap gas-shielded arc welding method according to the present embodiment with such a technology, it is possible to perform a welding process suitable for various steel plates, groove shapes, welding positions, and welding materials. Specifically, the distance d between the side edge portion at the welding wire tip and a groove surface of a steel plate according to the present embodiment is measured inline or online, and based on the results of the measurement, the distance d is automatically controlled or other welding conditions are controlled. This can suppress the occurrence of defects, such as poor penetration on the groove surface, and also achieve high welding efficiency.

Example

Hereinafter, an example of the present invention will be described. It should be noted that the following example is provided solely for illustrative purposes to describe the present invention in more detail and does not limit its scope of the present invention.

Narrow-gap gas-shielded arc welding was performed using multi-layer welding with a single electrode, employing a steel type (grade) and a welding wire shown in Table 1, under the welding conditions listed in Table 1. As a result, a narrow-gap gas-shielded arc weld joint (with a weld length of 500 mm) is produced.

During the narrow-gap gas-shielded arc welding, evaluation was conducted based on visual observation from a light-shielded face shield and analysis of high-speed camera footage, focusing on arc deviation from the target position, fluctuation, and the presence or absence of deflection. If the arc remained stable, the evaluation result was marked as "Stable"; if any deviation, fluctuation, or deflection was observed, the result was marked as "Unstable."

The obtained weld joint was cut along five specified cross-sections in the longitudinal direction. Then, the penetration depth p at a groove surface of a thick steel plate was determined for each cross-section.

It should be noted that, in the evaluation of penetration in Table 2, a case where "an arc was stable and the penetration depth at a groove surface of a thick steel plate was 1.0 mm or greater," is indicated by "A." A case where "an arc was stable and the penetration depth at a groove surface of a thick steel plate was greater than 0 mm but less than 1.0 mm," is indicated by "B." A case where deviation of an arc from a target position, variation, or deflection occurred due to arc instability, or where poor penetration occurred on a groove surface of a steel plate, is indicated by "F."

Table 2 collectively illustrates the results.

[Table 1]

Welding conditions

| Welding No. | Steel type (grade) | Plate thickness t (mm) | Welding wire (type) | Shielding gas (volume %) | Groove angle θ (°) | Gap G of groove at bottom (mm) | Diameter f of welding wire (mm) | Welding wire feed angle φ (°) | Distance h between power supply tip and wire tip (mm) | Distance d between side edge portion at welding wire tip and groove surface (mm) | Curvature radius ρ of welding wire (mm) | Welding current I (A) | Welding voltage V (V) | Wire feed rate W (cm/min) | Welding speed S (mm/min) | Welding heat input H (kJ/mm) |
|---|---|---|---|---|---|---|---|---|---|---|---|---|---|---|---|---|
| 1 | 590MPa-grade steel | 30 | YGW18 | 100%$CO_2$ | 15 | 8.0 | 1.2 | 8 | 24 | 0.5 | 200 | 300 | 34 | 1300 | 550 | 1.1 |
| 2 | 590MPa-grade steel | 60 | YGW18 | 100%$CO_2$ | 8 | 18.0 | 1.6 | 8 | 19 | 0.2 | 200 | 350 | 36 | 1600 | 350 | 2.2 |
| 3 | 590MPa-grade steel | 150 | YGW18 | 100%$CO_2$ | 2 | 12.0 | 1.2 | 0 | 24 | 1.5 | 150 | 320 | 35 | 1400 | 600 | 1.1 |
| 4 | 590MPa-grade steel | 200 | YGW18 | 100%$CO_2$ | 0 | 10.0 | 1.2 | 4 | 38 | 3.0 | 180 | 310 | 34 | 1300 | 450 | 1.4 |
| 5 | 590MPa-grade steel | 22 | YGW18 | 80%$CO_2$-20%Ar | 25 | 7.0 | 1.2 | 8 | 19 | 2.0 | 200 | 350 | 36 | 1600 | 400 | 1.9 |
| 6 | 780MPa-grade steel | 100 | G78A6 | 100%$CO_2$ | 5 | 10.0 | 1.2 | 8 | 12 | 1.0 | 200 | 290 | 37 | 1200 | 600 | 1.1 |
| 7 | 780MPa-grade steel | 80 | G78A6 | 100%$CO_2$ | 6 | 12.0 | 1.2 | 8 | 29 | 2.5 | 240 | 360 | 36 | 1700 | 500 | 1.6 |
| 8 | 590MPa-grade steel | 100 | YGW18 | 100%$CO_2$ | 2 | 8.0 | 1.4 | 8 | 24 | 1.0 | 290 | 310 | 33 | 1300 | 750 | 0.8 |

(continued)

| Welding No. | Steel type (grade) | Welding conditions | | | | | | | | | | | | | | | |
|---|---|---|---|---|---|---|---|---|---|---|---|---|---|---|---|---|---|
| | | Plate thickness t | Welding wire (type) | Shielding gas | Groove angle 0 | Gap G of groove at bottom | Diameter f of welding wire | Welding wire feed angle φ | Distance h between power supply tip and wire tip | Distance d between side edge portion at welding wire tip and groove surface | Curvature radius ρ of welding wire | Welding current I | Welding voltage V | Wire feed rate W | Welding speed S | Welding heat input H |
| | | (mm) | | (volume %) | (°) | (mm) | (mm) | (°) | (mm) | (mm) | (mm) | (A) | (V) | (cm/min) | (mm/min) | (kJ/mm) |
| 9 | 590MPa-grade steel | 40 | YGW18 | 100%$CO_2$ | 10 | 10.0 | 1.2 | 15 | 19 | 0.5 | 200 | 360 | 36 | 1600 | 900 | 0.9 |
| 10 | 590MPa-grade steel | 100 | YGW18 | 100%$CO_2$ | 8 | 10.0 | 1.2 | 0 | 24 | 3.0 | 200 | 300 | 32 | 1300 | 800 | <u>0.7</u> |
| 11 | 590MPa-grade steel | 60 | YGW18 | 80%$CO_2$-20%Ar | 10 | 12.0 | 1.4 | 4 | 24 | 3.5 | 200 | 300 | 31 | 1500 | 600 | 0.9 |
| 12 | 780MPa-grade steel | 80 | G78A6 | 100%$CO_2$ | 8 | 10.0 | 1.2 | 8 | 19 | 0.0 | 200 | 380 | 37 | 1800 | 350 | <u>2.4</u> |

EP 4 737 045 A1

[Table 2]

| Welding No. | K value | Arc instability and presence or absence of deflection | Presence or absence of poor penetration | Penetration depth p on groove surface (mm) | Evaluation of Penetration | Remarks |
|---|---|---|---|---|---|---|
| 1 | 33.6 | Stable | Absence | 1.1 | A | Invention Example |
| 2 | 63.2 | Stable | Absence | 3.0 | A | Invention Example |
| 3 | 33.1 | Stable | Absence | 1.8 | A | Invention Example |
| 4 | 42.2 | Stable | Absence | 2.1 | A | Invention Example |
| 5 | 54.4 | Stable | Absence | 2.2 | A | Invention Example |
| 6 | 33.2 | Stable | Absence | 1.3 | A | Invention Example |
| 7 | 43.3 | Stable | Absence | 2.1 | A | Invention Example |
| 8 | 25.0 | Stable | Absence | 0.1 | B | Invention Example |
| 9 | 25.6 | Stable | Absence | 0.7 | B | Invention Example |
| 10 | 20.4 | Stable | Presence | - | F | Comparative Example |
| 11 | 23.9 | Unstable | Presence | - | F | Comparative Example |
| 12 | 68.9 | Unstable | Presence | - | F | Comparative Example |

The results in Table 2 show that, in welding Nos. 1 to 9 listed as Invention Example, the arc was stable and an excellent weld without poor penetration was obtained. Among these, welding Nos. 1 to 7 exhibited stable arcs and a penetration depth of 1.0 mm or greater at a groove surface of a steel plate. In contrast, welding No. 10, which is Comparative Example, exhibited poor penetration at a groove surface of a steel plate, primarily due to insufficient welding heat input H. In welding Nos. 11 and 12, in which the K value of Expression (1) was not satisfied, poor penetration also occurred at a groove surface of a steel plate, caused by deviation of an arc from a target position, variation, or deflection resulting from arc instability.

Reference Signs List

1       steel plate (i.e., base metal)
2       groove surface
3       power supply tip of welding torch
4       welding wire
4a      welding wire tip
5       backing material
6       molten metal
7       weld metal
t       plate thickness
θ       groove angle
d       distance between side edge portion at welding wire tip and groove surface at bottom
h       distance between power supply tip and wire tip
f       diameter of welding wire
G       gap of groove at bottom
φ       welding wire feed angle
p       penetration depth on groove surface

**Claims**

1. A narrow-gap gas-shielded arc welding method for joining steel plates having a plate thickness t of 22 mm or greater, comprising performing narrow-gap multi-layer welding with a groove angle θ of 25° or less and a groove gap G at a bottom within the range of 7 mm to 18 mm,
   **characterized in that**

   a distance d between a side edge portion at a welding wire tip and a groove surface at a bottom of the steel plate is adjusted to fall within a range of 3.0 mm or less, and wherein a value of a variable K determined from Expression (1) below is adjusted to fall within a range of 24.0 to 66.0:

$$K = (92.3 \times I/W + 9.1) \times H - 0.5 \times d \ ... \ (1),$$

   where H represents a welding heat input (kJ/mm), I represents a welding current (A), and W represents a welding wire feed rate (cm/min).

2. The narrow-gap gas-shielded arc welding method according to claim 1, wherein

   a distance h from a tip of a power supply tip of a welding torch to the welding wire tip is set within a range of 10 mm to 40 mm, and
   a feed angle φ of the welding wire with respect to the groove at the bottom is set within a range of 0° to 15° with respect to a perpendicular line.

3. The narrow-gap gas-shielded arc welding method according to claim 1 or 2, wherein

   a diameter f of the welding wire is set within a range of 1.0 mm to 1.6 mm,
   the welding heat input H is set within a range of 0.8 kJ/mm to 2.3 kJ/mm,
   the welding current I is set within a range of 270 A to 370 A, and
   the welding wire feed rate W is set within a range of 1000 cm/min to 1700 cm/min.

4. The narrow-gap gas-shielded arc welding method according to any one of claims 1 to 3, wherein
   a penetration depth p at the groove surface is set to 1.0 mm or greater.

5. The narrow-gap gas-shielded arc welding method according to any one of claims 1 to 4, wherein
   a mixed gas containing 20 volume% or more $CO_2$ gas is used as a shielding gas for the gas-shielded arc welding.

6. The narrow-gap gas-shielded arc welding method according to any one of claims 1 to 5, wherein
   the welding wire fed to the power supply tip of an electrode is curved to have a curvature radius ρ within a range of 150 mm to 300 mm.

[Fig. 1]

[Fig. 2]

[Fig. 3]

[Fig.4]

[Fig.5]

## INTERNATIONAL SEARCH REPORT

| International application No. |
|---|
| **PCT/JP2024/011679** |

**A. CLASSIFICATION OF SUBJECT MATTER**

*B23K 9/173*(2006.01)i; *B23K 9/16*(2006.01)i
FI: B23K9/173 D; B23K9/16 J

According to International Patent Classification (IPC) or to both national classification and IPC

**B. FIELDS SEARCHED**

Minimum documentation searched (classification system followed by classification symbols)

B23K9/173; B23K9/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2014/088110 A1 (JFE STEEL CORPORATION) 12 June 2014 (2014-06-12) paragraphs [0019]-[0047], fig. 1-3 | 1-6 |
| A | JP 2003-094169 A (NKK CORP.) 02 April 2003 (2003-04-02) paragraphs [0014]-[0034], fig. 1-4 | 1-6 |

☐ Further documents are listed in the continuation of Box C.　　☑ See patent family annex.

| | |
|---|---|
| \*　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "D"　document cited by the applicant in the international application | "X"　document of particular relevance; the claimed invention cannot be considered novel or cannot be considered to involve an inventive step when the document is taken alone |
| "E"　earlier application or patent but published on or after the international filing date | |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
|---|---|
| **02 May 2024** | **21 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/011679**

| Patent document cited in search report | | | Publication date (day/month/year) | Patent family member(s) | | | Publication date (day/month/year) |
|---|---|---|---|---|---|---|---|
| WO | 2014/088110 | A1 | 12 June 2014 | EP 2929973 A1 paragraphs [0023]-[0084], fig. 1-3 CN 104853875 A KR 10-2015-0086372 A | | | |
| JP | 2003-094169 | A | 02 April 2003 | (Family: none) | | | |

Form PCT/ISA/210 (patent family annex) (July 2022)

**EP 4 737 045 A1**

**Patent documents cited in the description**

- JP 2009061483 A
- JP 2010115700 A
- JP 2015223605 A